# EUROPEAN PATENT APPLICATION

(11) **EP 4 686 391 A1**
(43) Date of publication of application: **04.02.2026**
(21) Application number: 24191955.4
(22) Date of filing: 31.07.2024
(51) Int. Cl.: A01D 41/127, A01D 43/08

(54) **METHOD AND SYSTEM FOR CONTROLLING A CROP TRANSFER PROCESS**

(71) Applicant: CNH Industrial Belgium N.V., 8210 Zedelgem (BE)
(72) Inventor: Beck, Rian, 8210 Zedelgem (BE); Boydens, Joachim, 8210 Zedelgem (BE); Kikken, Edward, 3920 Lommel (BE)
(74) Representative: CNH Industrial IP Department

(57) **Abstract**

A method of controlling a crop transfer process for transferring crop (40) between an agricultural harvester (10) and a nearby trailer (30), the method comprising: determining at least one trailer status parameter at a plurality of different points in time; determining at least one crop cloud parameter at the plurality of different points in time; determining a target point (35) in the trailer for the crop (40); determining a minimum engine speed of the harvester (10) based on the determined at least one trailer status parameter and at least one crop cloud parameter for the crop (40) to be transferred to the target point (35); and changing the engine speed of the harvester (10) to the determined minimum engine speed.

## Description

### TECHNICAL FIELD

The invention relates to the technical field of crop harvesting, and in particular to a method of controlling a crop transfer process for transferring crop between an agricultural harvester and a nearby trailer.

### BACKGROUND

Many agricultural harvesters, such as forage harvesters and combine harvesters, are equipped to unload the harvested crop into a nearby trailer while harvesting. This unloading may occur continuously, while the agricultural harvester drives over the field takes the crop from the field and, possibly, cuts, separates, or otherwise processes the harvested crop. For example, in a forage harvester, harvested grass, corn, or other crops are taken from the field, cut into small pieces by a chopper drum, and immediately blown out of a large spout, into the nearby trailer. In other agricultural harvesters, such as a combine harvester, the harvested and, possibly, processed crop is temporarily stored in a crop tank. When this crop tank is full, or when an opportunity arises to empty a half-full crop tank into a nearby trailer, the crop transfer process is started and executed while the agricultural harvester continues harvesting. Other examples of agricultural harvesters that may transfer crop into a trailer while harvesting are sugar cane harvesters, coffee harvesters, grape harvesters, and potato harvesters.

In the crop transfer process it is important that no crop is spilled unnecessarily by not reaching the trailer and falling on the field. Simultaneously controlling the harvesting and the crop transfer process is a very difficult task, even for the most experienced drivers and operators. To assist the driver with the crop transfer process, camera-based automatic and semi-automatic crop transfer control systems have, for example been proposed in the patent publications WO 2011/101458 A1 and EP 3 062 596 A1. While such camera-based control systems have helped to alleviate the operators' tasks, further improvements are still desired to get closer to the ultimate aim of full automation with no loss of crop.

### SUMMARY OF THE INVENTION

According to a first aspect, the invention provides a method of controlling a crop transfer process for transferring crop between an agricultural harvester and a nearby trailer. The method comprises: determining at least one trailer status parameter at a plurality of different points in time; determining at least one crop cloud parameter at the plurality of different points in time; determining a target point in the trailer for the crop; determining a minimum engine speed of the harvester based on the determined at least one trailer status parameter and at least one crop cloud parameter for the crop to be transferred to the target point; and changing the engine speed of the harvester to the determined minimum engine speed.

The method of the invention monitors a parameter, or parameters relating to the trailer, as well as a parameter, or parameters relating to the crop cloud, each over a period of time, in order to predict the ballistics of the crop cloud. By predicting the ballistics of the crop cloud, it is possible to determine a minimum speed of a blower of the harvester that would enable the crop to reach the target point in the trailer. Since the blower speed of the harvester is determined by the engine speed, this translates into determining a minimum engine speed of the harvester for the crop to be successfully transferred to the target point. Minimising the engine speed increases driver comfort and increases the fuel economy of the harvester. The predictive behaviour of the method ensures that crop transfer performance is not negatively impacted and, indeed, improves compared to the current manual and semi-automated control methods.

The method may further comprise calculating a change, and/or a rate of change, and/or acceleration of change of the or each trailer status parameter and/or the or each crop cloud parameter and subsequently determining the minimum engine speed based on the calculated change and/or rate of change and/or acceleration of change. This can allow for the prediction of the crop ballistics, which can lead to a more accurate determination of the necessary minimum blower speed for the crop to be successfully transferred in to the trailer.

The at least one trailer status parameter may include at least one of a position of the trailer, an orientation of the trailer and a relative speed of trailer compared to the harvester. The at least one crop cloud parameter may include at least one of a wind speed, a wind direction, a crop size and a velocity of the crop as it exits a spout of the harvester.

The method may further comprise maximising the angle between a flipper and a spout of the harvester, subject to a determined maximum operating angle for the flipper. In general, reducing the angle between the flipper and the spout reduces the distance that the crop cloud travels for a given blower speed. As such, minimising the engine speed (and hence the blower speed) generally requires the angle between the spout and the flipper to be maximised. However, a maximum operating angle for general use may be defined that allows some flexibility for the system to adapt to changing conditions. The maximum flipper operating angle may be 170°, or 175° when the harvester is operating in a rear-fill mode of operation and may be 140° when the harvester is operating in a side fill mode of operation.

The method may further comprise receiving an operator instructed minimum engine speed and determining the minimum engine speed additionally in dependence on the operator instructed minimum engine speed.

The method may further comprise determining a landing point of the crop in the trailer, determining a displacement vector between the landing point and the target point, and determining the minimum engine speed additionally in dependence on the magnitude and direction of the displacement vector.

The method may comprise using an optical sensor to determine the at least one trailer status parameter and/or the at least one crop cloud parameter. The optical sensor may be a LiDAR sensor. The method may further comprise analysing image data obtained by the optical sensor using a machine learning algorithm in order to determine the at least one trailer status parameter and/or the at least one crop cloud parameter.

In a second aspect, the invention provides a system for controlling a crop transfer process for transferring crop between an agricultural harvester and a nearby trailer. The system comprises: a first sensor for determining at least one trailer status parameter, and/or at least one crop cloud parameter; and a controller, operatively coupled to the first sensor and configured to perform the method discussed above.

In a third aspect, the invention provides an agricultural harvester comprising said system. The agricultural harvester may be a forage harvester or a combine harvester.

In a fourth aspect, the invention provides a non-transitory, computer-readable storage medium storing instructions thereon that when executed by one or more processors cause the one or more processors to execute the method discussed above.

### BRIEF DESCRIPTION OF THE DRAWINGS

The invention will now be described with reference to the following drawings, in which:
Figure 1 shows a perspective view of a forage harvester unloading crop into a nearby trailer being towed by a tractor;
Figures 2a to 2d show rear views of the forage harvester and trailer of Figure 1.

### DETAILED DESCRIPTION

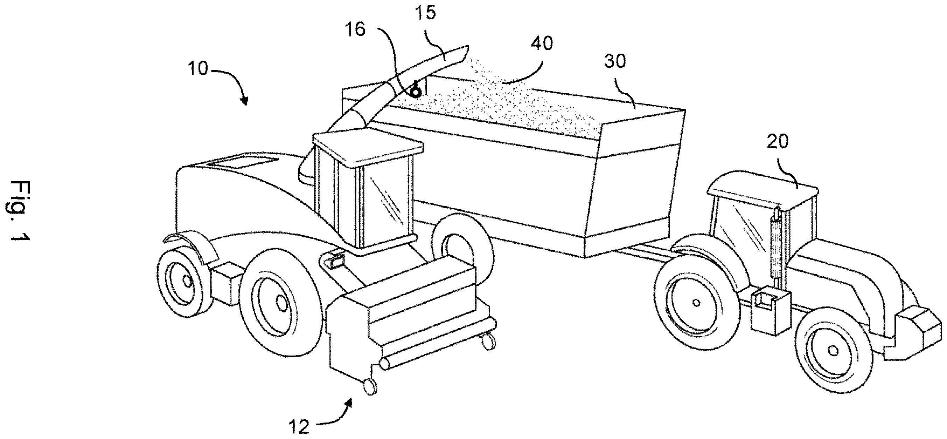

Figure 1 shows a forage harvester 10 unloading crop 40 into a nearby trailer 30. The forage harvester 10 is equipped with a grass pickup 12 for picking up swaths of grass from the field. In the forage harvester 10, the grass is chopped into small pieces and then accelerated by a blower that blows the cut grass 40 out of the spout 15 into the loading space of the trailer 30 that is pulled along the moving forage harvester 10 by a tractor 20.

In this crop transfer process it is important that no crop 40 is spilled unnecessarily by not reaching the trailer 30 and falling on the field. To aim the flow of crop 40 between the two vehicles 10, 30, the driving speed and direction of the tractor 20 and the forage harvester 10 need to be coordinated. Additionally, the driver of the forage harvester 10 has the possibility to control the crop release, for example by changing a height or orientation of the spout 15, the configuration of an end deflector (not shown) at the distal end of the spout 15, and the power with which the blower blows the cut grass 40 through, and out of, the spout 15.

The blower speed is directly linked to the speed of the engine of the harvester 10, with both measured in revolutions per minute (rpm). The invention aims to minimise the engine speed of the harvester 10. However, it must be ensured that the blower speed is sufficient for the crop 40 to be successfully delivered to the trailer 30. To do so, it is necessary for the ballistics of the crop 40 to be predicted as it leaves the spout 15. This may depend on a number of factors, as will be explained below.

The harvester 10 comprises a control system in order to predict the crop ballistics and to subsequently determine the minimum engine speed. To assist drivers of harvesters 10 with the crop transfer process, camera-based automatic and semi-automatic crop transfer control systems have been proposed before. Such camera-based control systems may, for example, use a camera 16 that is mounted under the spout 15 to monitor the crop flow between the harvester 10 and the trailer 30. The camera 16, or a similar optical sensor, is used for obtaining image data relating to the nearby trailer 30 at different points in time, with the image data being sent to a central controller. The control system may comprise additional cameras and/or a camera that is mounted to other parts of the forage harvester 10, such as a roof of the drive cabin. In the embodiments described herein, the camera 16 may, for example, be a point cloud sensor, an RGB camera, a stereo camera, or a radar sensor. In preferred embodiments, the point cloud sensor is a LiDAR sensor. A LiDAR sensor provides various technical advantages, such as being usable in the dark and working well in dusty conditions.

The image data obtained from the camera 16 is processed to determine one or more status parameters of the nearby trailer 30 at those different points in time. The status parameters may, for example, define a position of the trailer 30 relative to the harvester 10, an orientation of the trailer 30 relative to the harvester 10, a filling level of the trailer 30, or a crop pile shape of the crop 40 inside the trailer 30.

In addition to status parameters of the nearby trailer 30, a crop cloud parameter of the transferred crop 40 may be determined at the different points in time. The term 'crop cloud' is herein used as a term for the body of crop 40 as it moves through the air after departing from the harvester 10 and before reaching the nearby trailer 30. Depending on the circumstances, the crop cloud 40 can, for example, be large or small, compact or loose, well defined with clear, sharp borders or less well defined with blurred borders. Circumstances that may influence such and other crop cloud parameters include, e.g., crop type, wind speed, wind direction, speed and direction of the crop 40 when leaving the harvester 10, the amount of crop being transferred per unit of time, and a distance for the crop to travel between leaving the harvester 10 and reaching the nearby trailer 30. By taking into account the dynamics of the crop cloud 40, an even more accurate prediction of where and how the crop 40 will enter the nearby trailer 30 can be made, which improves the accuracy of the determination of the minimum engine speed.

Preferably, the image data includes images of the trailer 30 itself, but it is also possible to derive the trailer position from images that only include images of the tractor 20 that is pulling the trailer 30. Standard image recognition and edge detection algorithms may be used to determine the status parameters of the nearby trailer 30, as well as the crop cloud parameters of the transferred crop 40. Machine learning and neural networks may be employed to analyse the image data. The machine learning algorithms may be trained using large amounts of similar camera images of many different trailers 30, preferably taken by the same or an identical camera 16 during earlier harvesting sessions. The training data may include images taken while transferring crop 40 into the trailer 30, and images taken while no crop 40 is being transferred. Alternatively or additionally, synthetic training data may be used for training the machine learning algorithms. The accuracy of the image analysis may be further improved by taking into account trailer-specific information, such as the size and shape of the trailer 30, or the length and design of the coupling mechanism connecting the trailer 30 to the tractor 20. The training images may be classified and analysed by experienced users who are capable of identifying relevant features and who can assign values to one or more relevant status parameters. One advantage of the use of advanced image recognition techniques, such as those applying machine learning algorithms and neural networks, is that the trailer can be reliably recognised, even when it hasn't been fitted with special markers or indicators.

Having determined the trailer status parameter, or parameters, and the crop cloud parameter, or parameters, the controller can predict the ballistics of the crop cloud 40. In particular, the controller is able to determine the blower speed (and hence the engine speed) required for the crop 40 to be delivered to a target point 35 inside the trailer 30. The target point may be determined by the driver or operator of the harvester 10, or may be determined by the control system depending on, for example the filling level of the trailer 30 or a shape of the crop pile inside the trailer 30. The target point may, for example be positioned in a centre of a loading space of the trailer 30, far away from the edges of the loading space to reduce the risk of the crop 40 falling off at the wrong side of those edges. Furthermore, the target point 35 may be adjusted to avoid continuing filling the trailer 30, or a portion of the trailer 30, that is already full and cannot take any more crop 40 without risking the additional crop 40 to fall off.

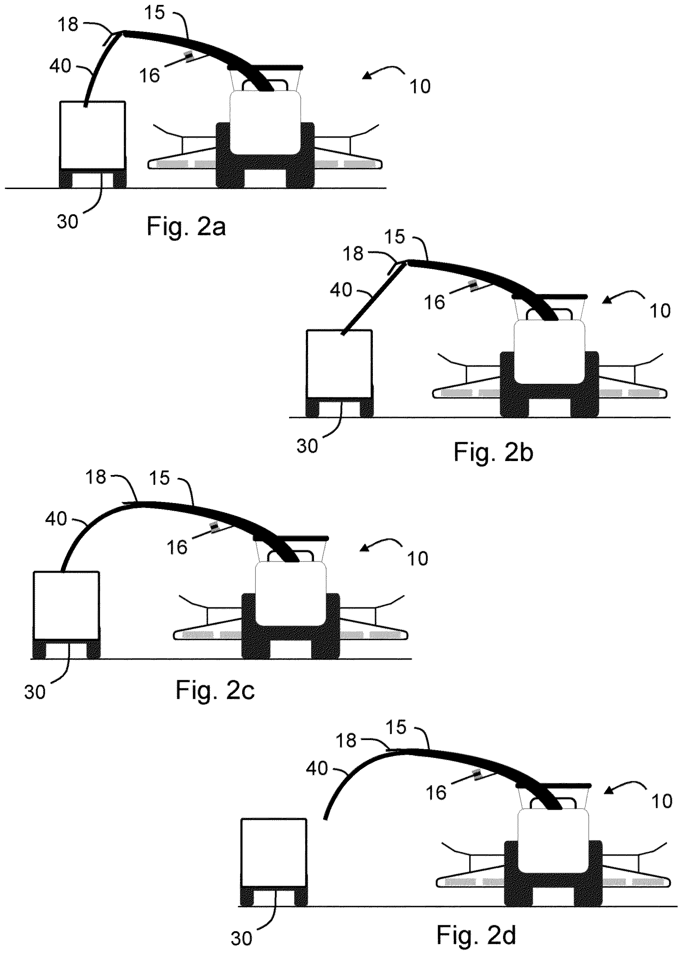

One additional factor that also influences the crop ballistics is the stretch angle of a flipper 18 at the end of the spout 15. The flipper 18 is hingedly connected to a top section of the end of the spout 15 so that the angle of the crop cloud 40 as it leaves the spout can be closed or opened, as seen in Figures 2a to 2d. Opening the angle of the flipper 18 with respect to the spout 15 may be referred to as 'stretching' the flipper 18, while closing the angle of the flipper 18 may be referred to as 'bending' the flipper 18. Being able to control the angle of the flipper 18 is a useful feature when the harvester 10 and tractor 20 are under full manual control, as it enables some degree of control over the ballistics of the crop cloud 40, as will be explained below.

In Figure 2a, the flipper 18 is shown in a default configuration, in which the flipper 18 is partially closed. As can be seen, the crop cloud 40 follows the angle of the flipper 18 as it leaves the spout 15 and is transferred to the trailer 30. As shown in Figure 2a, the flipper 18 may be articulated to provide greater control over the trajectory of the crop cloud 40.

In Figure 2b, the trailer 30 is further away from the harvester 10. However, the flipper 18 is closed at the same angle as in Figure 2a. In order for the crop cloud 40 to reach the trailer 30, therefore, the blower speed must increase to propel the crop cloud 40 the required distance. This requires a corresponding increase in engine speed. Figure 2c shows an alternative approach where, instead of increasing the blower speed, the angle of the flipper 18 is opened to a maximum value, both with respect to the hinging angle between the spout 15 and the flipper 18 and with respect to any articulation within the flipper 18 itself. This allows the crop cloud 40 to travel a greater distance without increasing the speed of the blower and so be successfully delivered to the trailer 30 despite the increased distance between the harvester 10 and the trailer 30 compared to Figure 2a.

In Figure 2d, the distance between the harvester 10 and the trailer 30 has increased to such an extent that the crop cloud 40 does not reach the trailer 30 at the instant blower speed, despite the flipper 18 being fully stretched. In this case, the blower speed must increase in order for the crop cloud 40 to be successfully transferred to the trailer 30. It therefore follows that, for any given distance between the harvester 10 and trailer 30, the minimum blower speed for successful transfer of the crop 40 to the trailer will typically be achieved when the flipper 18 is fully stretched.

In some circumstances, however, the controller may define a maximum operating opening angle for the flipper 18 to in normal use, leaving a headroom available for small, or quick changes in the ballistics of the crop cloud 40. The amount of headroom, and hence the maximum operating angle, may change depending on the mode of operation of the harvester 10, i.e., whether the harvester 10 is operating in a rear-fill mode of operation, where the tractor 20 drives substantially behind the harvester 10, or a side-fill mode of operation, where the tractor 20 drives substantially alongside the harvester 10. Taking a fully-bent configuration of the flipper 18 as 90°, and a fully-stretched configuration of the flipper 18 as 180°, the maximum operating angle may, for example, be 175°, or 170° when the harvester 10 is operating in a rear-fill mode of operation.

When the harvester 10 is operating in a side-fill mode of operation, the proximity of the trailer 30 to the spout 15 means that the crop 40 could exit the spout 15 at a very low speed and still be successfully transferred to the trailer 30. However, such a low speed of the crop 40 within the spout 15 risks blockages forming in the spout 15. To avoid this, a minimum speed of the crop 40 within the spout 15 is desired: this requires the flipper 18 to be bent to a greater extent than in the rear-fill mode. As such, in the side-fill mode, the maximum operating angle of the flipper 18 may be 140°.

The controller takes the maximum operating opening angle of the flipper into consideration when determining the minimum engine speed of the harvester 10. While this will lead to a slightly higher minimum engine speed than if the flipper 18 was allowed to be fully stretched, this gives the crop transfer process greater flexibility to make any adjustments that might be necessary to ensure successful transfer of the crop 40 to the trailer 30.

To improve the performance of the crop transfer process, the controller may estimate status parameters of the trailer 30 at a further and later point in time based on the one or more determined status parameters at the different points in time. The controller may then determine the minimum engine speed in dependence on the estimated status parameters. The step of estimating status parameters at the further point in time may comprise calculating a change, a rate of change, and/or an acceleration of change of the determined status parameter between the different points in time. Analysis of the change patterns of the status parameters that are observable and derivable from the image data is thus used as a reliable starting point for calculating reliable estimates of the same and other parameters at later points time, thereby allowing the crop transfer control system to proactively adjust the crop transfer process and minimise crop spillage. Future trailer status parameters can be accurately predicted by analysing how these parameters have recently developed over time and by accurately extrapolating the just acquired data into the near future.

The estimates for one or more different status parameters may be determined for one or more future points in time. Each estimated status parameter may, for example, define a position of the trailer 30 relative to the harvester 10, an orientation of the trailer 30 relative to the harvester 10, a filling level of the trailer 30, or a crop pile shape of the crop 40 inside the trailer 30. Accurate predictions of such parameters help the controller system to calculate a minimum engine speed that will enable the crop 40 to be successfully delivered to the target point 35.

In addition to status parameters of the nearby trailer 30, a crop cloud parameter of the transferred crop 40 may be determined at the different points in time. Based on the determined crop cloud parameter at the different points in time, the crop cloud parameter is then estimated at the further point in time, and the minimum engine speed is adjusted in dependence of the estimated crop cloud parameter. The estimating of the crop cloud parameter at the further point in time may include determining a wind speed and direction at either the past different points in time or the future further point in time. The wind speed and direction may, for example, be determined relative to the field, the harvester 10, or the nearby trailer 30. Preferably, the wind speed and direction are calculated as relative values indicating or representing the resulting drag on the crop 40 to be transferred.

In addition to this predictive element of the crop transfer process, the controller may incorporate a feedback element to further improve the accuracy of the crop transfer process. In doing so, the controller may analyse the image data obtained by the camera 16, or another optical sensor to determine a landing point of the crop cloud 40. As the crop cloud 40 is naturally diffuse to at least some degree, the landing point may be determined by determining the average landing position of crop in the crop cloud 40 over a determined period of time.

With the landing point determined, the controller may determine a displacement vector from the landing point to the target point 35. Based on the size and direction of the displacement vector, the controller can make adaptations to various aspects of the crop transfer process, including the estimations of the trailer status parameter(s) and the crop cloud parameter(s) and, directly or indirectly, the determination of the minimum engine speed. By adjusting the crop transfer process based on the displacement vector, more accurate predictions of the crop ballistics can be made, further improving the accuracy of the crop transfer process.

In some scenarios, a driver or operator of the harvester 10 may be able to set an absolute minimum speed for the engine, for example to ensure that the harvesting of the crop 40 occurs at a minimum desired speed. If the minimum engine speed determined by the controller is slower than the absolute minimum speed set by the driver or operator, the absolute minimum speed takes precedence. In this case, other aspects of the crop transfer process can be adjusted to ensure that the crop 40 is successfully delivered to the target point 35 in the trailer 30. For example, the angle of the flipper 18 may be closed to bring the landing point of the crop cloud 40 closer to the harvester.

## Claims

1. A method of controlling a crop transfer process for transferring crop (40) between an agricultural harvester (10) and a nearby trailer (30), the method comprising:
determining at least one trailer status parameter at a plurality of different points in time;
determining at least one crop cloud parameter at the plurality of different points in time;
determining a target point (35) in the trailer for the crop (40);
determining a minimum engine speed of the harvester (10) based on the determined at least one trailer status parameter and at least one crop cloud parameter for the crop (40) to be transferred to the target point (35); and
changing the engine speed of the harvester (10) to the determined minimum engine speed.

2. The method of Claim 1, further comprising calculating a change, and/or a rate of change, and/or acceleration of change of the or each trailer status parameter and/or the or each crop cloud parameter and subsequently determining the minimum engine speed based on the calculated change and/or rate of change and/or acceleration of change.

3. The method of Claim 1 or Claim 2, wherein the at least one trailer status parameter includes at least one of a position of the trailer (30), an orientation of the trailer (30) and a relative speed of trailer (30) compared to the harvester (10).

4. The method of any preceding claim, wherein the at least one crop cloud parameter includes at least one of a wind speed, a wind direction, a crop size and a velocity of the crop (40) as it exits a spout (15) of the harvester (10).

5. The method of any preceding claim, further comprising maximising the angle between a flipper (18) and a spout (15) of the harvester (10), subject to a determined maximum operating angle for the flipper (18).

6. The method of any preceding claim, further comprising receiving an operator instructed minimum engine speed and determining the minimum engine speed additionally in dependence on the operator instructed minimum engine speed.

7. The method of any preceding claim, further comprising determining a landing point of the crop in the trailer (30), determining a displacement vector between the landing point and the target point (35), and determining the minimum engine speed additionally in dependence on the magnitude and direction of the displacement vector.

8. The method of any preceding claim, comprising using an optical sensor (16) to determine the at least one trailer status parameter and/or the at least one crop cloud parameter.

9. The method of Claim 8, wherein the optical sensor (16) is a LiDAR sensor.

10. The method of Claim 8 or Claim 9, comprising analysing image data obtained by the optical sensor (16) using a machine learning algorithm in order to determine the at least one trailer status parameter and/or the at least one crop cloud parameter.

11. A system for controlling a crop transfer process for transferring crop (40) between an agricultural harvester (10) and a nearby trailer (30), the system comprising:
a first sensor for determining at least one trailer status parameter, and/or at least one crop cloud parameter; and
a controller, operatively coupled to the first sensor and configured to perform the method of any preceding claim.

12. An agricultural harvester (10) comprising the system of Claim 11.

13. The agricultural harvester (10) of Claim 12, wherein the agricultural harvester (10) is a forage harvester or a combine harvester.

14. A non-transitory, computer-readable storage medium storing instructions thereon that when executed by one or more processors cause the one or more processors to execute the method of any one of Claims 1 to 10.
